# EUROPEAN PATENT APPLICATION

(11) **EP 3 339 681 A1**
(43) Date of publication of application: **27.06.2018**
(21) Application number: 15885778.9
(22) Date of filing: 18.08.2015
(51) Int. Cl.: F16H 1/46

(54) **LOW NOISE AUTOMOBILE TRUNK REDUCER**

(71) Applicant: Shenzhen Zhaowei Machinery&electronics Co., Ltd., Shenzhen, Guangdong 518103 (CN)
(72) Inventor: LI, Ping, Shenzhen Guangdong 518103 (CN); XU, Shangxiang, Shenzhen Guangdong 518103 (CN); REN, Qingliang, Shenzhen Guangdong 518103 (CN)
(74) Representative: dompatent von Kreisler Selting Werner - Partnerschaft von Patent- und Rechtsanwälten mbB
(86) International application number: PCT/CN2015/087306
(87) International publication number: WO 2017/028195

(57) **Abstract**

A low-noise car trunk reducer which includes an internal gear housing (10), an input mechanism (20), and at least two stages of planet gear transmission mechanisms (30, 40); the internal gear housing (10) includes an internal gear housing body (11) and a first helical gear (12) integrally formed on an inner wall of the internal gear housing body (11); a first-stage planet retainer (31) of the first-stage planet gear transmission mechanism (30) is formed integrally; the input mechanism (20) includes a first-stage sun gear (21); the first-stage sun gear (21), the first-stage planet gear (32), the second-stage sun gear (43), the second-stage planet gear (42) and the internal gear housing body (11) are all transmitted by helical gears. In the low-noise car trunk reducer, the helical gear structure and the internal gear housing body are formed integrally, such that helical gears can be avoided from manufacturing errors caused by processing separately and assembling. Meanwhile, the first-stage retainer also adopts a monolithic structure, which improves the overall running accuracy and sealing performance of the reducer, and avoids assembly errors caused by combining and assembling; each driving wheel is transmitted by helical gears; the contact ratio is high, the running performance is steady, and the bearing capacity is strong.

## Description

### FIELD OF THE INVENTION

The present application relates to the technical field of reducers, especially to a low-noise car trunk reducer.

### BACKGROUND OF THE INVENTION

An existing car trunk reducer generally adopts a multi-stage spur-gear planet reducer mechanism. Although a spur gear is convenient to be processed, its contact ratio is low and its running stability is poor, thus the noise of the planet reducer is relatively high. In order to solve the noise problem, some car trunks adopt combined structures including spur gears plus helical gears or including helical gears plus helical gears. However, since an internal gear housing adopts the combined structures, the part of spur gears plus the helical gears or each stage of the part of helical gears require separately processing, which results in that the overall structure of the reducer is complex, the requirement for the assembly accuracy is high, the manufacture difficulty is big, and the cost is high; at the same time, the sealing performance of the reducer is poor.

### SUMMARY OF THE INVENTION

A purpose of the present application is to provide a low-noise car trunk reducer, which aims to overcome the problems in the prior art that a planet reducer is noisy and poor in running stability, and that a combined helical internal gear housing is complex in structure, has a high requirement for assembly accuracy, has a big manufacturing difficulty, and is poor in sealing performance.

In order to overcome the above technical problems, a technical solution provided by the present application is to provide a low-noise car trunk reducer, which includes an internal gear housing, an input mechanism arranged inside the internal gear housing, and at least two stages of planet gear transmission mechanisms. The internal gear housing includes an internal gear housing body and a first helical gear integrally formed on an inner wall of the internal gear housing body. The at least two stages of planet gear transmission mechanisms include a first-stage planet gear transmission mechanism and a second-stage planet gear transmission mechanism. The first-stage planet gear transmission mechanism includes a first-stage planet retainer formed integrally and a first-stage planet gear mounted on the first-stage planet retainer. The second-stage planet gear transmission mechanism includes a combined second-stage planet retainer and a second-stage planet gear mounted on the second-stage planet retainer. The input mechanism includes a first-stage sun gear. The first-stage sun gear is fixed at an output shaft of an external motor. The first-stage sun gear is provided with a second helical gear; the first-stage planet gear is provided with a third helical gear engaged with the second helical gear; the third helical gear is also engaged with the first helical gear; the first-stage planet retainer is provided with a second-stage sun gear; the second-stage sun gear is provided with a fourth helical gear; the second-stage planet gear is provided with a fifth helical gear engaged with the fourth helical gear; the fifth helical gear is also engaged with the first helical gear.

Optionally, the first-stage planet retainer includes a first roof arranged in parallel, a first baseboard, and a first connecting pole connecting the first roof with the first baseboard. There are a plurality of first connecting poles arranged spacedly. The first-stage sun gear is located at a center between the first roof and the first baseboard. There are a plurality of second-stage planet gears, and each of the second-stage planet gears is fixed between two adjacent ones of the first connecting poles through the first stationary shaft.

Optionally, the first roof is provided with a first mounting hole; the first baseboard is provided with a second mounting hole; two ends of the first stationary shaft are respectively fixed inside the first mounting hole and the second mounting hole through interference fits.

Optionally, an upper surface center and a bottom surface center of the first planet gear are respectively provided with grooves. Each of the grooves is provided therein with a gasket. Two ends of the first stationary shaft run through the gaskets and are inserted into the first mounting hole and the second mounting hole respectively.

Optionally, the gasket forms an interference fit with the grooves; the first stationary shaft forms a clearance fit with the gaskets.

Optionally, the second-stage planet retainer includes a second roof arranged in parallel, a second baseboard, and a second connecting pole connecting the second roof with the second baseboard. There are a plurality of second connecting poles arranged spacedly; the second-stage sun gear is located at a center between the second roof and the second baseboard. There are a plurality of second-stage planet gears, and each of the second-stage planet gears is fixed between two adjacent ones of the second connecting poles through the second stationary shaft.

Optionally, a top surface of the second roof is provided with a hollow sleeve; the sleeve is provided with an internal spline which cooperates with an external output mechanism to output power. A bottom of the sleeve is provided with a plug. A bottom surface of the plug is in contact with a top surface of the second-stage sun gear on the first-stage planet retainer.

Optionally, one end of the internal gear housing is provided with an outlet; the sleeve protrudes outside the internal gear housing through the outlet. An output bearing is provided between the sleeve and the outlet.

Optionally, one end of the internal gear housing body is provided with an outlet; the sleeve protrudes outside the internal gear housing body through the outlet. An output bearing is provided between the sleeve and the outlet.

Optionally, the other end of the internal gear housing body is provided with an inlet. The inlet is provided with an end cap. The internal gear housing body is fixedly connected with the end cap through a bolt; the output shaft of the external motor runs through the end cap and is connected to the first-stage sun gear.

In the present application, the helical gear structure inside the internal gear housing and the internal gear housing body are formed integrally, such that engaging portions between the helical gears and each stage of the gears can be avoided from manufacturing errors caused by processing separately and assembling. Meanwhile, the first-stage retainer also adopts a monolithic structure, which simplifies the internal structure of the internal gear housing, improves the overall running accuracy and sealing performance of the reducer, and avoiding assembly errors caused by combining and assembling. Furthermore, the first-stage sun gear, the first-stage planet gear, the second-stage sun gear, the second-stage planet gear and the internal gear housing body are all transmitted by helical gears; the contact ratio is high, the running performance is steady, and the bearing capacity is strong. Moreover, the aforesaid structure can make the reducer structure be more compact with smaller volume.

### BRIEF DESCRIPTION OF THE DRAWINGS

Fig. 1 is a side view of a low-noise car trunk reducer provided by an embodiment of the present application;
Fig. 2 is a sectional view of the low-noise car trunk reducer provided by the embodiment of the present application;
Fig. 3 is a sectional view of an internal gear housing in the embodiment of the present application;
Fig. 4 is an exploded schematic view of the low-noise car trunk reducer provided by the embodiment of the present application;
Fig. 5 is an exploded schematic view of a first-stage planet gear transmission mechanism provided by the embodiment of the present application;
Fig. 6 is an exploded schematic view of a second-stage planet retainer provided by the embodiment of the present application.
Wherein:
10. internal gear housing
11. internal gear housing body
111. outlet
112. inlet
12. first helical gear
20. input mechanism
21. first-stage sun gear
22. second helical gear
30. first-stage planet gear transmission mechanism
31. first-stage planet retainer
311. first roof
312. first baseboard
313. first connecting pole
314. first mounting hole
315. second mounting hole
32. first-stage planet gear
321. third helical gear
322. groove
33. first stationary shaft
34. gasket
40. second-stage planet gear transmission mechanism
41. second-stage planet retainer
411. second roof
412. second baseboard
413. second connecting pole
414. sleeve
415. internal spline
416. plug
417. output bearing
42. second-stage planet gear
421. fifth helical
43. second-stage sun gear
431. fourth helical gear
44. second stationary shaft
40. external motor
51. output shaft
52. end cap
53. input bearing

### DETAILED DESCRIPTION OF THE PREFERRED EMBODIMENT

In order to make the purposes, technical solutions, and advantages of the present application more clear, the present application will be further described in detail. It should be understood that the specific embodiments described herein are merely intended to explain but not to limit the present application.

It should be noted that when a component is referred to as "fixed at" or "arranged at" another component, the component can be located at the other component directly or an intermediate component may also exist. When a component is referred to as "connected to" another component, the component can be connected to the other component directly, or an intermediate component may also exist.

It should further noted that position terms used in the embodiments, such as left, right, up, down, and the like, are merely relative concepts or take a normally used condition of a product as reference, and should not be considered as being restrictive.

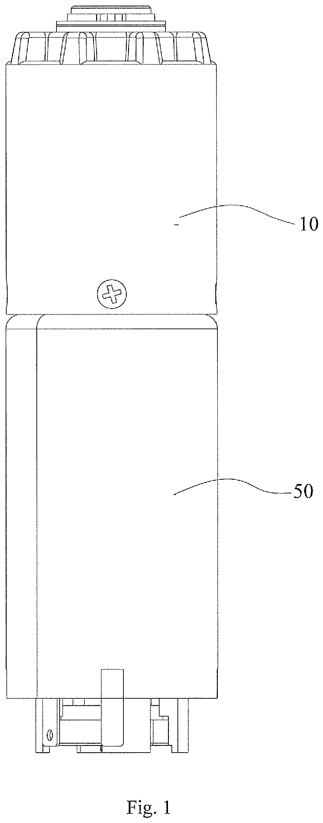

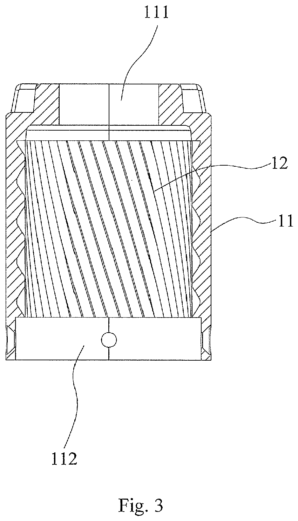

Referred to Figs. 1-3, a low-noise car trunk reducer provided by an embodiment of the present application includes an internal gear housing 10, an input mechanism 20 arranged inside the internal gear housing 10 and at least two stages of planet gear transmission mechanisms(in this embodiment, there are two stages of planet gear transmission mechanisms). The internal gear housing 10 includes an internal gear housing body 11 and a first helical gear 12 integrally formed on an inner wall of the internal gear housing body 11. The two stages of planet gear transmission mechanisms include a first-stage planet gear transmission mechanism 30 and a second-stage planet gear transmission mechanism 40. The first-stage planet gear transmission mechanism 30 includes a first-stage planet retainer 31 formed integrally and a first-stage planet gear 32 mounted on the first-stage planet retainer 31. The second-stage planet gear transmission mechanism 40 includes a combined second-stage planet retainer 41 and a second-stage planet gear 42 mounted on the second-stage planet retainer 41. The input mechanism 20 includes a first-stage sun gear 21. The first-stage sun gear 21 is fixed at an output shaft 51 of an external motor 50. The first-stage sun gear 21 is provided with a second helical gear 22; the first-stage planet gear 32 is provided with a third helical gear 321 engaged with the second helical gear 22; the third helical gear 321 is also engaged with the first helical gear 12 on the inner side of the internal gear housing 10; the first-stage planet retainer 31 is provided thereon with a second-stage sun gear 43; the second-stage sun gear 43 is provided with a fourth helical gear 431; the second-stage planet gear 42 is provided with a fifth helical gear 421 engaged with the fourth helical gear 431; the fifth helical gear 421 is also engaged with the first helical gear 12.

In this embodiment of the invention, the helical gear structure inside the internal gear housing 10 and the internal gear housing body 11 are formed integrally, such that engaging portions between the helical gears and each stage of the gears can be avoided from manufacturing errors caused by processing separately and assembling. Meanwhile, the first-stage retainer 31 also adopts a monolithic structure, which simplifies the internal structure of the internal gear housing 10, improves the overall running accuracy and sealing performance of the reducer, and avoiding assembly errors caused by combining and assembling. Furthermore, the first-stage sun gear 21, the first-stage planet gear 32, the second-stage sun gear 43, the second-stage planet gear 42 and the internal gear housing body 11 are all transmitted by helical gears; the contact ratio is high, the running performance is steady, and the bearing capacity is strong. Moreover, the aforesaid structure can make the reducer structure be more compact with smaller volume.

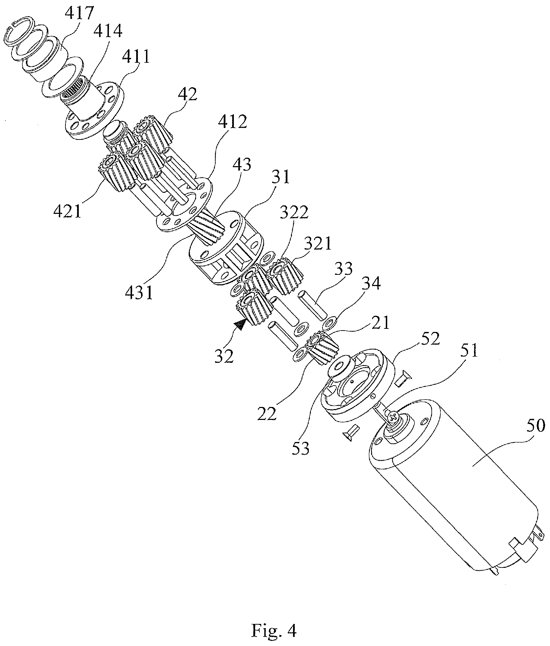

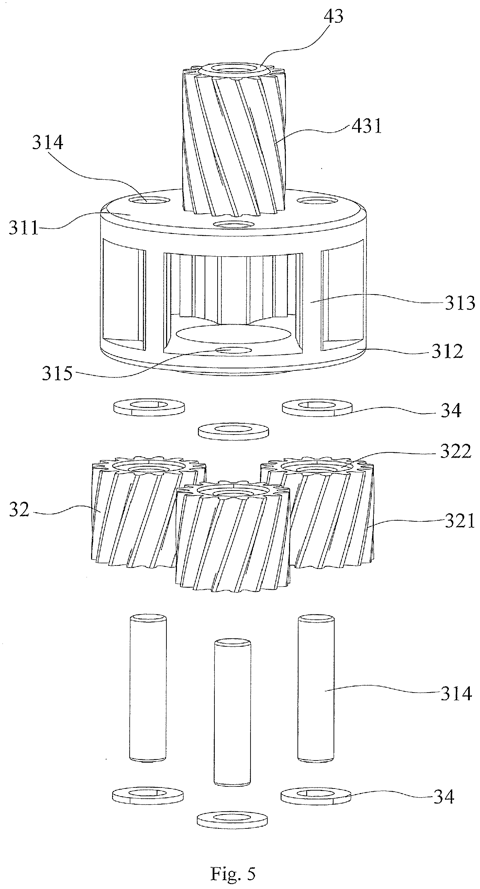

Referred to Figs. 4-5, the first-stage planet retainer 31 includes a first roof 31 arranged in parallel, a first baseboard 312, and a first connecting pole 313 connecting the first roof 311 with the first baseboard 312. The first roof 311, the first baseboard 312, and the first connecting pole 313 are formed integrally. The monolithic structure improves the relative precision of the first roof 311 and the first baseboard 312 of the retainer, and will not bring any assembling error. As shown in the figures, there are three first connecting poles 313 which are arranged spacedly. In this way, three accommodating spaces are formed among the three first connecting poles 313 for accommodating three first-stage planet gears 32. Each of the first-stage planet gears 32 is fixed in an accommodating space between two adjacent ones of the first connecting poles 313 through a first stationary shaft 33. The first-stage sun gear 21 is located at a center between the first roof 311 and the first baseboard 312, that is, located at a center of the three first-stage planet gears 32.

When the output shaft 51 of the external motor 50 rotates, the first-stage sun gear 21 is driven to rotate coaxially. Since the first-stage sun gear 21 is engaged with the three first-stage planet gears 32, the first-stage sun gear 21 drives the three first-stage planet gear 32 to rotate around the first stationary shaft 33 reversely. Meanwhile, the three first-stage planet gears 32 are also engaged with the first helical gear 12 of the internal gear housing 10; however, the internal gear housing 10 is stationary, that is, the internal gear housing 10 does not rotate. In this way, the three first-stage planet gears 32 drive the first-stage planet retainer 31 to rotate; the first-stage planet retainer 31 rotates in the same rotating direction as that of the first-stage sun gear 21, and the first stage of deceleration is completed.

In this embodiment, the first roof 311 is provided with a first mounting hole 314; the first baseboard 312 is provided with a second mounting hole 315; two ends of the first stationary shaft 33 are respectively fixed inside the first mounting hole 314 and the second mounting hole 315 through interference fits. The first planet gear 32 is sheathed on the first stationary shaft 33. Two ends of the first stationary shaft 33 adopts the interference fits to make the first stationary shaft 33 be mounted more securely, and further protect the first planet gear 32 from transformation during bearing any load or working, thereby improving running stability of the reducer.

As a further preferred scheme, an upper surface center and a bottom surface center of the first planet gear 32 are respectively provided with grooves 322. Each of the grooves 322 is provided therein with a gasket 34. Two ends of the first stationary shaft 33 respectively run through the gaskets 34, and are respectively inserted into the first mounting hole 314 and the second mounting hole 315. After the first planet gear 32 is mounted, two gaskets 34 are respectively located between the first planet gear 32 and the first roof 311 and between the first planet gear 32 and the first baseboard 312. Under the protection of the gaskets 34, the first-stage planet retainer 31 can be protected from being scratched by upper and lower surfaces of the first-stage planet gear 32; furthermore, the noise of the reducer is reduced.

Furthermore, the gasket 34 forms an interference fit with the groove 322 through an outside diameter thereof; when the first stationary shaft 33 runs through the gasket 34, the first stationary shaft 33 forms a clearance fit with an internal hole of the gasket 34. By this tolerance fit, the first-stage planet gear 32 is prevented from radial runout during mounting and running, and thus the assembling difficulty is reduced.

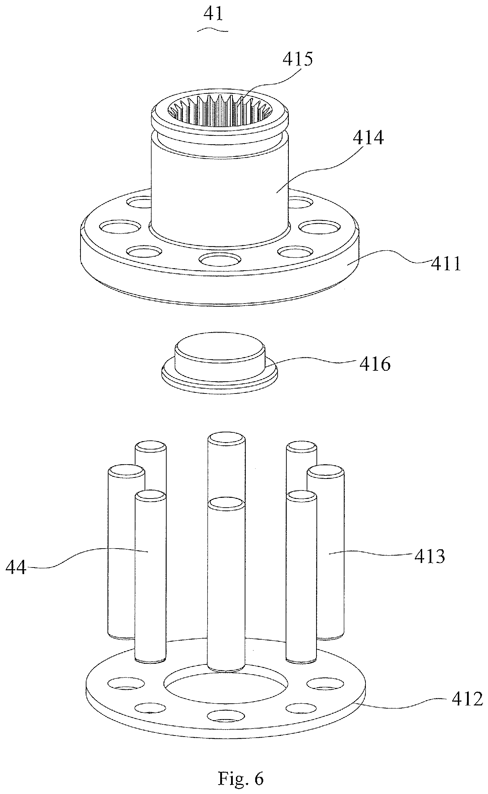

In combination with Figs. 4 and 6, the second-stage planet retainer 41 includes a second roof 411 arranged in parallel, a second baseboard 412, and a second connecting pole 413 connecting the second roof 411 with the second baseboard 412. There are a plurality of the second connecting poles 413 (in this embodiment, there are four second connecting poles) arranged spacedly. There are a plurality of the second-stage planet gears 42 (in this embodiment, there are four second-stage planet gears), and each of the second-stage planet gears 42 is fixed between two adjacent ones of the second connecting poles 413 through a second stationary shaft 44. The second sun gear 43 is located at a center between the second roof 411 and the second baseboard 412, that is, located at a center of the four second-stage planet gears 42.

When the first-stage planet retainer 31 is rotated, the second sun gear 43 on the first-stage planet retainer 31 is rotated too. Since the second-stage sun gear 43 is engaged with the four second-stage planet gear 42, the second-stage sun gear 43 drives the four second-stage planet gears 42 to rotate around the second stationary shaft 33 reversely. Meanwhile, the four second-stage planet gears 42 are further engaged with the first helical gear 12 of the internal gear housing 10. Since the internal gear housing 10 is stationary, that is, the internal gear housing 10does not rotate, the four second-stage planet gears 42 drive the second-stage planet retainer 41 to rotate; the second-stage planet retainer 41 rotates in the same rotating direction as that of the second-stage sun gear 43, and the second stage of deceleration is completed.

In this embodiment, a top surface of the second roof 411 is provided with a hollow sleeve 414; the sleeve 414 is provided with an internal spline 415 which can cooperate with an external output mechanism to output power. A bottom of the sleeve 414 is provided with a plug 416. A bottom surface of the plug 416 is in contact with the top surface of the second-stage sun gear 43 on the first-stage planet retainer 31. Since only two stages of the planet retainers 31 exist in this embodiment, the internal spline 415 is arranged at the second-stage planet retainer 41 to act as an output end and cooperates with the external output mechanism to output power. Surely, if more stages of planet gear mechanisms exist, the internal spline 415 can be arranged at the planet retainer of the last stage to act as an output end. On one hand, the plug 416 provided herein blocks off the bottom of the sleeve 414 so as to avoid any external matter from dropping into the internal gear housing 10 through the sleeve 414; meanwhile, the plug 416 limits the second-stage sun gear 43 on the first-stage planet retainer 31 axially, such that axial runout is reduced and the running stability of the reducer is improved.

When the second-stage planet retainer 41 rotates, the sleeve 414 rotates along with the second-stage planet retainer 41. Meanwhile, the sleeve 414 drives the output mechanism to rotate through the internal spline 415 so as to output power.

Furthermore, one end of the internal gear housing body 11 is provided with an outlet 111; the sleeve 414 protrudes outside the internal gear housing body 11 through the outlet 111. An output bearing 417 is provided between the sleeve 414 and the outlet 111. The output bearing 417 provided herein reduces the sliding friction between the sleeve 414 and the inner wall of the internal gear housing body 11, thereby reducing noise.

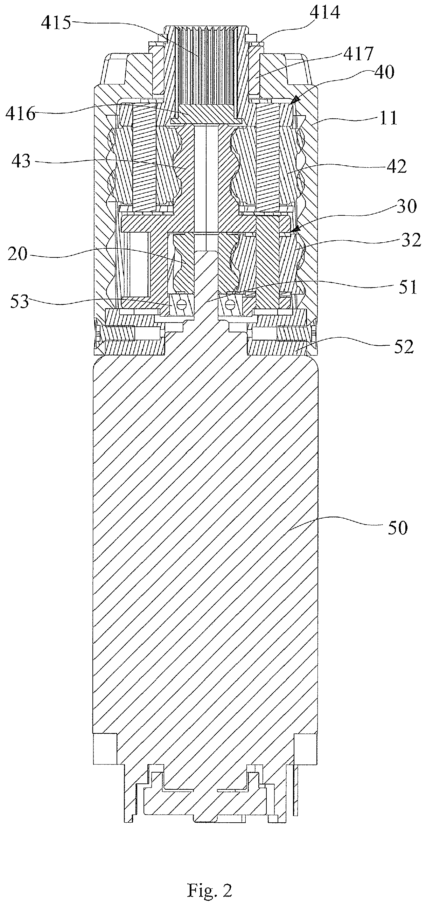

In combination with Figs. 2 and 4, the other end of the internal gear housing body 11 is provided with an inlet 112. The inlet 112 is provided with an end cap 52. The internal gear housing 10 is fixedly connected with the end cap 52 through a bolt; meanwhile, the output shaft 51 of the external motor 50 runs through the end cap 52 and is connected to the first-stage sun gear 21. The internal gear housing 10 and the end cap 52 utilize this connecting structure to improve the sealing class of the internal gear housing 10.

Similarly, an input bearing 53 is provided between the output shaft 51 of the external motor 50 and the first-stage planet retainer 31. The input bearing 53 provided herein supports the output shaft 51 of the external motor 50, and improves the rotation precision at the same time.

Above all, this embodiment of the present application adopts a monolithic structure of the internal gear housing 10 and a monolithic structure of the first-stage planet retainer 31, which simplify the structure of the internal gear housing 10, improve the assembly precision of the reducer, improve the running stability of the planet gears, reduce the noise of the reducer, and improve the bearing capacity.

The above contents are only preferred embodiments of the present application, and are not intended to limit the present application. Any modifications, equivalent replacements and improvements made within the spirit and principle of the present application should be contained within the protection scope of the present application.

## Claims

1. A low-noise car trunk reducer, comprising an internal gear housing, an input mechanism arranged inside the internal gear housing, and at least two stages of planet gear transmission mechanisms, **characterized in that** the internal gear housing includes an internal gear housing body and a first helical gear integrally formed on an inner wall of the internal gear housing body; the at least two stages of planet gear transmission mechanisms include a first-stage planet gear transmission mechanism and a second-stage planet gear transmission mechanism; the first-stage planet gear transmission mechanism includes a first-stage planet retainer formed integrally and a first-stage planet gear mounted on the first-stage planet retainer; the second-stage planet gear transmission mechanism includes a combined second-stage planet retainer and a second-stage planet gear mounted on the second-stage planet retainer; the input mechanism includes a first-stage sun gear; the first-stage sun gear is fixed at an output shaft of an external motor; the first-stage sun gear is provided with a second helical gear; the first-stage planet gear is provided with a third helical gear engaged with the second helical gear; the third helical gear is also engaged with the first helical gear; the first-stage planet retainer is provided with a second-stage sun gear; the second-stage sun gear is provided with a fourth helical gear; the second-stage planet gear is provided with a fifth helical gear engaged with the fourth helical gear; the fifth helical gear is engaged with the first helical gear.

2. The low-noise car trunk reducer of claim 1, **characterized in that** the first-stage planet retainer includes a first roof arranged in parallel, a first baseboard, and a first connecting pole connecting the first roof with the first baseboard; there are a plurality of the first connecting poles arranged spacedly; the first-stage sun gear is located at a center between the first roof and the first baseboard; there are a plurality of second-stage planet gears, and each of the second-stage planet gears is fixed between two adjacent ones of the first connecting poles through the first stationary shaft.

3. The low-noise car trunk reducer of claim 2, **characterized in that** the first roof is provided with a first mounting hole; the first baseboard is provided with a second mounting hole; two ends of the first stationary shaft are respectively fixed inside the first mounting hole and the second mounting hole through interference fits.

4. The low-noise car trunk reducer of claim 3, **characterized in that** an upper surface center and a bottom surface center of the first planet gear are respectively provided with grooves; each of the grooves is provided therein with a gasket; two ends of the first stationary shaft run through the gaskets and are inserted into the first mounting hole and the second mounting hole respectively.

5. The low-noise car trunk reducer of claim 4, **characterized in that** the gasket forms an interference fit with the grooves; the first stationary shaft forms a clearance fit with the gaskets.

6. The low-noise car trunk reducer of any one of claims 1-5, **characterized in that** the second-stage planet retainer includes a second roof arranged in parallel, a second baseboard, and a second connecting pole connecting the second roof with the second baseboard; there are a plurality of second connecting poles arranged spacedly; the second-stage sun gear is located at a center between the second roof and the second baseboard; there are a plurality of second-stage planet gears, and each of the second-stage planet gears is fixed between two adjacent ones of the second connecting poles through the second stationary shaft.

7. The low-noise car trunk reducer of claim 6, **characterized in that** a top surface of the second roof is provided with a hollow sleeve; the sleeve is provided with an internal spline which cooperates with an external output mechanism to output power; a bottom of the sleeve is provided with a plug; a bottom surface of the plug is in contact with a top surface of the second-stage sun gear on the first-stage planet retainer.

8. The low-noise car trunk reducer of claim 6, **characterized in that** one end of the internal gear housing body is provided with an outlet; the sleeve protrudes outside the internal gear housing body through the outlet; an output bearing is provided between the sleeve and the outlet.

9. The low-noise car trunk reducer of any one of claims 1-5, **characterized in that** the other end of the internal gear housing body is provided with an inlet which is provided with an end cap; the internal gear housing body is fixedly connected to the end cap through a bolt; the output shaft of the external motor runs through the end cap and is connected to the first-stage sun gear.

10. The low-noise car trunk reducer of claim 9, **characterized in that** an input bearing is provided between the output shaft of the external motor and the first-stage planet retainer.
